# EUROPEAN PATENT SPECIFICATION

(11) **EP 2 767 513 B1**
(45) Date of publication and mention of the grant of the patent: **06.12.2023**
(21) Application number: 12840325.0
(22) Date of filing: 15.10.2012
(51) Int. Cl.: C02F 1/32, C02F 1/461

(54) **METHOD FOR PURIFYING WATER WITHOUT THE USE OF SALTS, AND WATER-PURIFICATION REACTOR**
VERFAHREN ZUR REINIGUNG VON WASSER OHNE VERWENDUNG VON SALZEN UND WASSERREINIGUNGSREAKTOR
PROCÉDÉ D'ÉPURATION D'EAU SANS AJOUT DE SELS ET RÉACTEUR D'ÉPURATION D'EAU

(30) Priority: 14.10.2011 ES 201131648 P
(43) Date of publication of application: 20.08.2014
(73) Proprietor: I.D. Electroquimica, S.L., 03114 Alicante (ES)
(72) Inventor: SANCHEZ CANO, Gaspar, E-03114 Alicante (ES); PEREZ MALLOL, Jose, Ramon, E-03114 Alicante (ES); CODINA RIPOLL, Guillermo, E-03114 Alicante (ES)
(74) Representative: Carpintero Lopez, Francisco
(86) International application number: PCT/ES2012/070707
(87) International publication number: WO 2013/053971

(56) References cited:
- WO-A1-99/01382
- WO-A2-01/42143
- CN-Y- 2 848 834
- DE-A1- 4 400 308
- ES-T3- 2 203 541
- JP-A- S6 028 884
- KR-A- 20040 066 971
- US-A- 4 381 240
- US-A- 4 767 511
- US-A- 5 395 522
- US-A1- 2001 004 962
- US-A1- 2007 108 056
- US-A1- 2009 314 711
- US-A1- 2011 024 361
- US-B2- 7 326 330

## Description

### Technical Field of the Invention

The present invention corresponds to the technical field of integral swimming pool water treatments for both residential and public swimming pools.

### Background of the Invention

There is a series of swimming pool water treatments today based on different, widely used techniques. The most widely used among these treatments are those using the electrolysis technique, and on the other hand those using the ultraviolet radiation technique.

A series of advantages and, at the same time, a series of drawbacks are obtained depending on the type of treatment implemented.

With the electrolysis technique, the water to be treated is subjected to a direct electric current by means of introducing electrodes (cathode, anode) therein. In the electrolysis phenomenon cathodic reduction and anodic oxidation processes, which are used for purifying and disinfecting swimming pool water, take place simultaneously.

Electrolysis processes require certain conductivity in the water. The electrochemical process does not occur at zero conductivity. Electrolysis processes for swimming pool water treatment generally work at dissolved salt concentrations between 4 and 6 g/l, which makes it necessary to add salts (4-6 kg/m3, generally NaCl) during start-up and annually replenish between 1 and 2 kg/m3 due to volume losses (fundamentally from washing the filter). Filling water (tap water) conductivity is equivalent to about 0.5 g/l of salts.

On the other hand, the electrolysis process increases water pH, so it requires the controlled and continuous addition of a pH reducer (pH minus).

Small concentrations of chlorine and sodium hydroxide are generatedin situduring the electrolysis process, and they recombine to form hypochlorous acid, HClO, subsequently reducing organic matter and pathogens, being transformed into salt again.

This method has a series of advantages, such as water and energy savings, because it does not increase residual cyanuric acid; chloramine reduction (cathodic reduction); organic matter oxidation; and it furthermore prevents having to add chlorine in either solid or liquid form because the electrolysis reaction itself produces sufficient amounts of chorine (1-2 mg/l)in situ.

Furthermore, obtained water quality is excellent, requires simple maintenance and has a residual effect (1-2 ppm chlorine).

However, electrolysis has limitations, such as the need to add salts to the basin, the increase in conductivity (generally 4-6 kg/m3 of salts) and the periodic replenishment of salts due to water losses resulting from washing the filter (1-2 kg/m3 yearly).

On the other hand, there is the ultraviolet (UV) radiation technique, based on using the effect of said radiation to disinfect and remove living microorganisms in the swimming pool water to be treated.

This is achieved by means of a physical process of altering the DNA of said microorganisms, without chemical additives or variations in the smell or taste of the water or the pH thereof.

On the other hand, UV radiation has the capacity to remove chloramines present in swimming pool water which are limited by law (generally to < 0.6 mg/L) and which cause the overwhelming "chlorine" smell and irritations to the skin, mucous membranes and the respiratory system for swimmers, companions and maintenance staff alike.

UV treatment does not require the addition of salt and minimizes the need for washing the filter, whereby saving water and energy.

As drawbacks, it must be pointed out that it is a local treatment, so it does not have residual effect and does not have organic matter oxidation capacity, whereby the addition of some type of oxidizer and disinfectant, such as chlorine, bromine or peroxide, for example, is necessary. Continuous pH control is also required when these compounds are added.

KR20040066971 discloses an apparatus for treating ballast water by filtration UV electrolysis complex sterilizing process is provided to secure safety of ballast water and prevent pollution of inland and coastal waters by treating a large quantity of ballast water continuously and promptly and sterilizing harmful microorganisms and pathogenic bacteria completely.

JPS6028884 discloses a device for decomposing organic matters contained in waste water by oxidation with high efficiency and to prevent generation of sludge by performing oxidation treatment of waste water filled in a reaction apparatus by dispersing ozonized gas in the waste water simultaneously with electrolysis and irradiation with ultraviolet rays of the waste water.

CN2848834 discloses a device for treating organic waste water. Air cathodes, electrocatalysis anodes and an ultraviolet light source are simultaneously arranged in the electrolytic tank. The air cathodes are attached at both sides of the electrolytic tank. The electrocatalysis anodes are installed at the center position of the electrolytic tank. The ultraviolet light source is fixed between the air cathodes and the electrocatalysis anodes.

WO0142143 A2 discloses a method for treating fluids operates on a continuously flowing stream of fluid. The stream is acted upon in a continuous flow process to generate a disinfectant species (e.g., chlorine) in the stream and to simultaneously lower the pH of the stream below approximately 4.0. The stream is passed through and electrodialytic cell and an electric potential difference is applied across electrodes of the cell during the passage of the stream through the cell.

US 4767511 A discloses a system for automatic control of chlorine content and pH in swimming pools. This system includes an electrolytic cell for generation of chlorine and caustic soda as needed, and an acid supply system for adding hydrochloric acid to the pool as required.

US 2001/004962 A1 discloses a water treatment device comprising electrolyzing and sterilizing means, comprising an electrolytic tank to put water in and an electrode provided in the electrolytic tank in order to electrolyze the water stored in pools such as swimming pool.

US 2011/024361 A1 discloses a method for purifying water of a swimming pool, use of chemical precursor carousel where the injection of chemicals is controlled by control unit.

US 2009/314711 A1 discloses teaches the simultaneous application of UV radiation together with electrolytic treatment and all within a reactor having a bottom inlet and a top outlet.

US 7 326 330 B2 discloses a method for purifying water without the addition of additional salts, in a single reactor using electrolysis and a UV lamp formed by a quartz sleeve but is lacking the acid generating capacity.

### Description of the Invention

The method for purifying water, without the addition of salts, of the type used for treating swimming pool water herein proposed comprises the simultaneous application of electrolysis technique and ultraviolet radiation technique on the water to be treated, which both take place in a single reactor with synergistic result with respect to the techniques.

Said method for purifying comprises a first phase in which water enters the reactor.

Then in the second phase, water circulates inside the reactor such that it travels therethrough from the end where said water enters to the opposite end thereof, such that the water is simultaneously exposed to both electrolysis and ultraviolet radiation techniques as it travels.

Finally, the third phase comprises the treated water exiting the reactor.

These phases are not successive, but rather are continuous for the time the process lasts once said process is initiated. In other words, once the water enters the process and starts to circulate in the reactor, as it travels, water continues to enter the reactor so that it can be treated. Likewise, as water exits the reactor, the same amount of water enters said reactor so that it can be treated.

Said method further comprises the addition of a pH minus acid to the reactor to neutralize the increase in pH caused by the electrolysis process. Said addition is performed at a point close to the water inlet of said reactor.

With the addition of this acid in that area specific, the pH value is reduced, maintaining constant values in the range of 7.0 to 7.8 (optimal range for disinfection and treatment). At the same time, it generates chemical cleaning for the insulating element (quartz sleeve) of the ultraviolet radiation lamp existing inside the reactor as a result of the dissolution of deposited salts, fundamentally Ca and Mg salts, which prevent effective radiation of the volume of the reactor, reducing the UV-C mJ/cm2 dose. This addition of pH minus also helps clean the electrolysis electrodes (cathode), even if they work with polarity reversal, because salts (especially Ca, Mg salts) also tend to deposit on the cathodes, and it will suitably help clean them (dissolution).

The pH minus acid used is preferably hydrochloric acid, HCl. Therefore, in addition to the advantages mentioned above, chloride is introduced in the medium as a pH minus anion. This anion improves the current efficiency of the chloride to chlorine electrolysis process, improving organic matter oxidation and disinfection process.

In this method for purifying, the structural design of the UV-C radiation and electrolysis plates in one and the same reactor allows water disinfection, chloramine removal, and organic matter oxidation in a suitable manner. The number of times the filter in the swimming pool has to be washed is thus minimized, which enables a sufficient natural concentration of its own salts by up to 1-2 g/l due to evaporation of the sheet of water.

The saline concentration thereof thus increases in the order of between 0.5 to 1.5 g/l with respect to the makeup water, which usually has a concentration of 0.5 g/l, whereby avoiding the need to perform a periodic addition of salt from outside to the swimming pool basin, as occurs in conventional electrolysis.

Likewise, water circulating through the reactor must have a flow rate, in cm/sec, comprised between a minimum value such that the exit of gases from the reactor is assured and the reactor is not overrun with micro-bubbles produced by electrolysis therein, and a maximum value which assures a minimum dwell time of the water inside the reactor (dwell time x minimum UV-C mJ/cm2 dose) so that the water is effectively and simultaneously subjected to both processes.

This specification also describes the reactor for purifying water, without the addition of salts, used in said method for purifying described above, but not being part of the present invention.

This reactor is a unique reactor of the method, inside which reactor the two electrolysis and ultraviolet radiation techniques are performed simultaneously.

Said reactor comprises therein at least one bundle of electrodes with at least two electrodes each for electrolysis (cathode-anode, with or without polarity reversal) and at least one ultraviolet lamp for the low- or medium-pressure ultraviolet radiation process.

These electrodes are preferably in the form of a plate or an expanded mesh with a monopolar, bipolar or mixed electrical configuration. They apply a cathode-anode voltage between 3 and 24 Vdc and a current density between 1 and 60 mA/cm2, with salt concentrations between 0.3 and 6 g/l.

In turn, the ultraviolet lamps are tubular-shaped and comprise an also tubular-shaped insulating element preferably formed by a quartz sleeve for insulating the medium. Said lamps provide a UV-C dose between 1 and 60 mJ/cm2.

It further has an inner plate parallel to the bundle or bundles of electrodes, having the function of minimizing shunt current losses in the case of bipolar currents.

It in turn comprises a water inlet connection and a water outlet connection.

The reactor also comprises a lower supporting flange for supporting the assembly formed by the bundle or bundles of electrodes and the ultraviolet lamps.

At the opposite end, the reactor comprises an upper flange for securing the bundle or bundles of electrodes and the ultraviolet lamps.

Said upper flange comprises at least two L-shaped flat bars in the upper portion thereof (cathode-anode).

The upper portion of this upper flange also comprises leak-tight closure means for the quartz sleeve containing the UV lamp.

All the preceding elements are located in a tubular body of the reactor, one of the ends of which is secured to the lower supporting flange, whereas the other end of which has a closure element for closing it.

Said tubular body has two holes for the outward exit of the water inlet and outlet connections of the reactor.

In turn, the closure element for closing one of the ends of the tubular body of the reactor is formed by a tubular-shaped cap which is sized such that the upper flange of the reactor fits tightly in the inner portion thereof.

The reactor further comprises a pH minus acid injection element for injecting pH minus acid into the reactor at a point close to the water inlet of said reactor.

The method for purifying water, without the addition of salts, of the type used for treating swimming pool water herein proposed achieves significant advantages with respect to the methods used in the state of the art.

Therefore, the simultaneous application of a combination of electrolysis technique and ultraviolet radiation technique achieves the synergy of both techniques, enhancing the advantages of each one and eliminating their drawbacks.

In addition, the method itself manages to maintain sufficient natural conductivity of a low salt concentration in the order of 1 to 2 g/l, thereby avoiding having to perform any addition of said salts throughout the entire method.

This is achieved as a result of the fact that when the electrolysis technique is combined with the ultraviolet radiation technique, the latter effectively enhances chloramine destruction, the number of times the filter has to be washed thereby being reduced with it.

As a result of this reduction of the number of times the filter is washed and daily natural evaporation of swimming pool water, a slight natural salt concentration is allowed in the swimming pool without needing to perform periodic additions.

In practice, natural salt concentrations of around 1.0 to 2 g/l (conventional electrolysis requires 4-6 g/l) are achieved, i.e., between 0.5 to 1.5 g/l higher with respect to the makeup water. The electrode configuration allows working with these low salt concentrations, assuring sufficient chlorine production, applying voltages between 3 to 24 Vdc and current densities between 5 and 50 mA/cm2, preferably with polarity reversal. UV-C doses (by means of low- or medium-pressure) allow doses between 1 and 60 mJ/cm2.

In turn, in addition to obtaining a salt concentration in a completely natural manner, water and energy savings are generated as a result of said reduction of the number of times the filter has to be washed.

Another advantage of this method is that the increase in pH generated by the electrolysis process is herein solved by means of the addition of a pH minus acid, preferably consisting of hydrochloric acid, which regulates pH values (between 7.0 and 7.8).

In addition to regulating pH values, an added advantage is offered by means of introducing the pH minus acid in the process in a certain specific location such as inside the reactor, at a point close to the inlet thereof. This advantage consists of the pH minus dissolving Ca and Mg deposits on the quartz sleeve of the UV lamps. A chemical cleaning is thus applied to said quartz sleeves, which would otherwise have to be cleaned periodically because the accumulation of these Ca and Mg deposits end up generating a film on said sleeve, reducing radiation in the medium.

The addition of pH minus also has a positive effect on cleaning cathodes even with polarity reversal (self-cleaning electrode).

Finally, the addition of pH minus, preferably HCl, provides chloride anions to the medium, improving the chloride to chlorine electrochemical process.

On the other hand, the reactor for purifying water, without the addition of salts, used in said method for purifying herein proposed also has advantages with respect to those methods existing in the state of the art as a result of unifying both processes and allowing their synergistic simultaneous application.

With the shape it has and the arrangement of its parts, the present invention further achieves forcing all the water to have a minimum dwell time in the reactor so that the reactions that have to take place are completed by means of both simultaneous processes. The dwell time must be such that it assures correct discharge of the electrolysis gases (which reduce UV-C radiation transmittance in the medium) and simultaneously assures a sufficient UV-C dose (mJ/cm2).

Since the minimum flow rate of water is also limited, the gases generated by electrolysis inside the reactor effectively exit said reactor; otherwise, they would generate a series of bubbles in the water, causing internal ultraviolet radiation loss as good transmission does not occur.

### Brief Description of the Drawings

For the purpose of aiding to better understand the features of the invention according to a preferred practical embodiment thereof, a set of drawings is attached as an integral part of said description where the following has been depicted with an illustrative and non-limiting character:
Figure 1 shows an elevational profile view of the inner portion of the reactor for purifying water without the addition of salts used in the method herein proposed.
Figure 2 shows an elevational profile view of the reactor for purifying water, with the outer tubular body and the closure cap.
Figure 3 shows a perspective view along direction A of the inner portion of the reactor for purifying water.
Figure 4 shows a perspective view along direction B of the inner portion of the reactor for purifying water.
Figure 5 shows a perspective view similar to that of Figure 4, in which the connection of the probe holder at the inlet of the reactor for purifying water can be seen.
Figure 6 shows a cross-section view of the reactor, in which the first phase of the method for purifying water, without the addition of salts, is depicted.
Figure 7 shows a cross-section view of the reactor in which pH minus is injected at the inlet thereof.
Figure 8 shows a cross-section view of the reactor in which several moments of the second phase of the method for purifying water, without the addition of salts, are depicted.
Figure 9 shows a cross-section view of the reactor in which the third phase of the method for purifying water, without the addition of salts, is depicted.

### Detailed Description of a Preferred Embodiment of the Invention

In view of the drawings provided, it can be seen how in a preferred embodiment of the invention, the method for purifying water, without the addition of salts, of the type used for the swimming pool treatment herein proposed, comprises the application of two techniques, i.e., electrolysis and ultraviolet radiation techniques, on the water to be treated, said techniques being applied simultaneously in a single reactor.

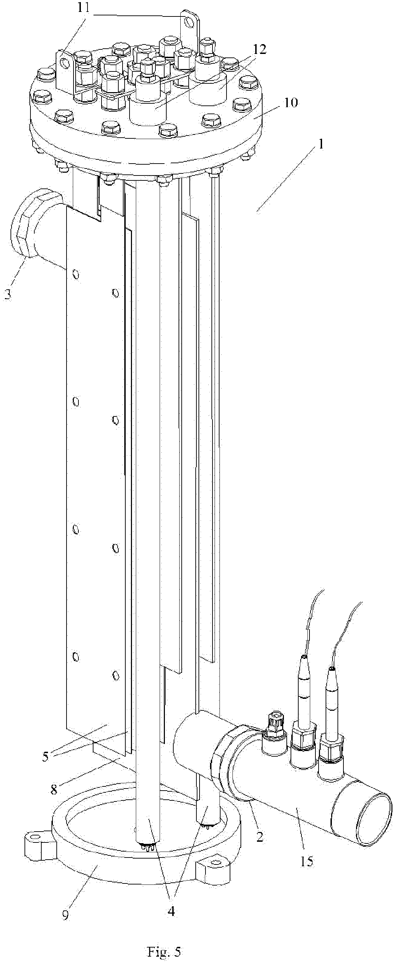

Figures 5 to 9 show the different phases comprised in this method.

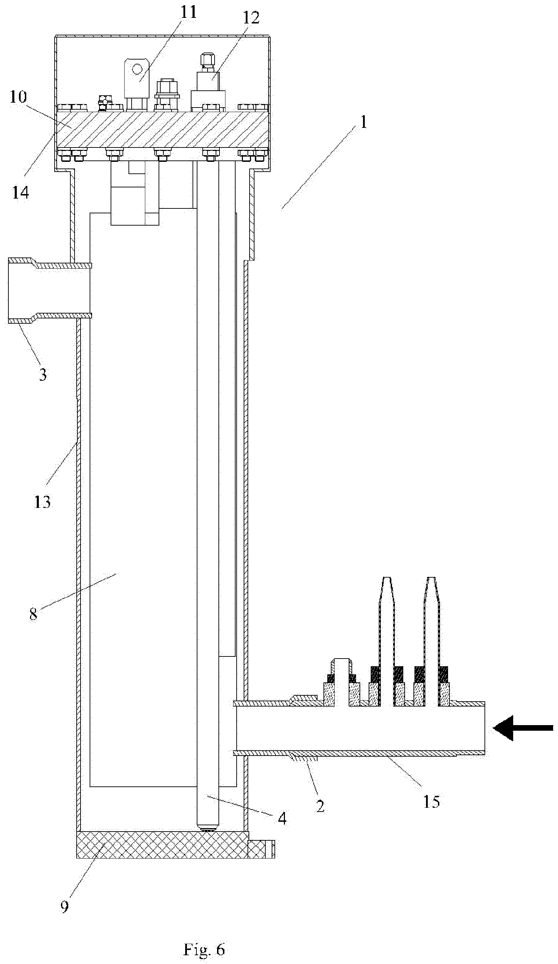

The first phase, which is seen in Figure 6, consists of the water to be treated entering the reactor (1).

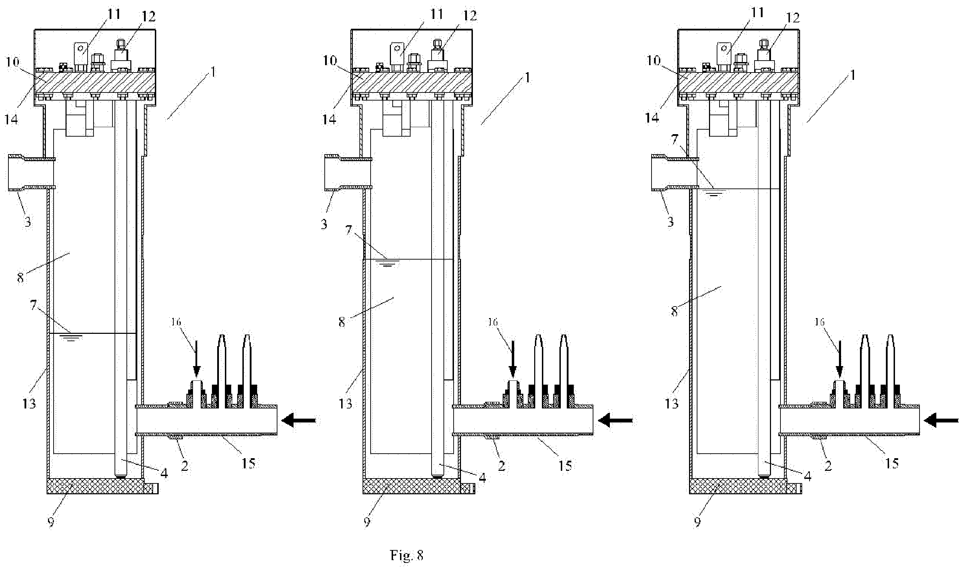

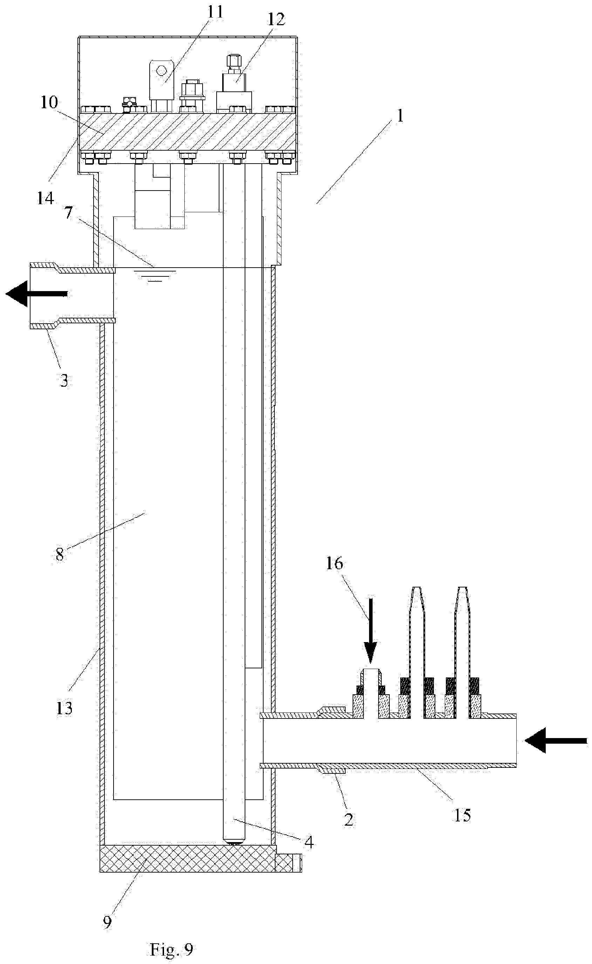

The second phase, which is shown in Figure 8, consists of the water (7) introduced in the reactor (1) circulating through said reactor (1), such that the water is exposed to both the electrolysis and ultraviolet radiation processes simultaneously as it travels, said processes being completed when the water reaches the outlet of the reactor (1), which is the third phase, shown in Figure 9.

Figures 8 and 9 show an arrow indicating that water continues entering the reactor. This is because they are not consecutive phases, but rather are continuous over time once the process is initiated.

In other words, while the water (7) initially entering the reactor (1) travels through same for treatment and subsequently exits, water (7) keeps on entering same continuously, and likewise as treatment is completed, water exits the reactor continuously.

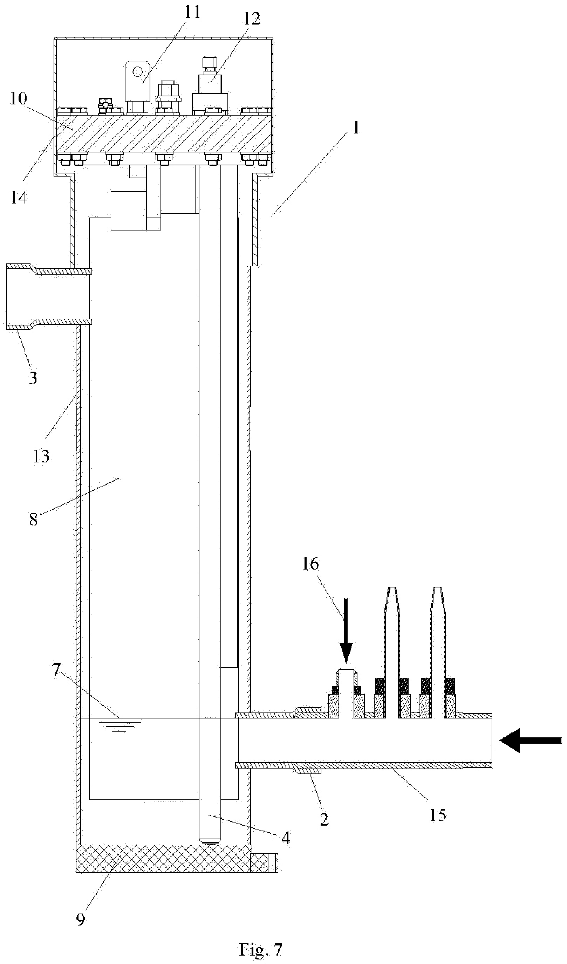

Figure 7 shows step existing between the first and the second phases, consisting of introducing a pH minus acid, which in this preferred embodiment of the invention is hydrochloric acid, in the reactor (1).

The addition of this acid, depicted by means of an arrow (16), is performed at a point close to the water inlet connection (2) in the reactor (1) by means of a probe holder (15) coupled to the inlet connection (2) of the reactor, as can be seen in Figure 5 .

Said addition in that specific area regulates the pH, reducing it to acceptable values, and furthermore it generates chemical cleaning of the quartz of the ultraviolet radiation lamps (4) existing inside the reactor (1).

Furthermore, since the pH minus acid added in this preferred embodiment of the invention is hydrochloric acid (HCl), with said acid chloride anions are added to the medium, improving the chloride to chlorine electrolysis process.

The second phase consists of the water (7) circulating through the reactor (1), such that it meets the condition of said flow rate being comprised between a minimum assuring the discharge of gases produced by electrolysis inside the reactor and a maximum allowing sufficient dwell time of the water inside said reactor, so the purification process is completed by both methods simultaneously.

In addition to the already described method for purifying water without the addition of salts, this specification also describes the reactor (1) for performing said water purification by means of the method, without the addition of salts, said reactor not being part of the invention.

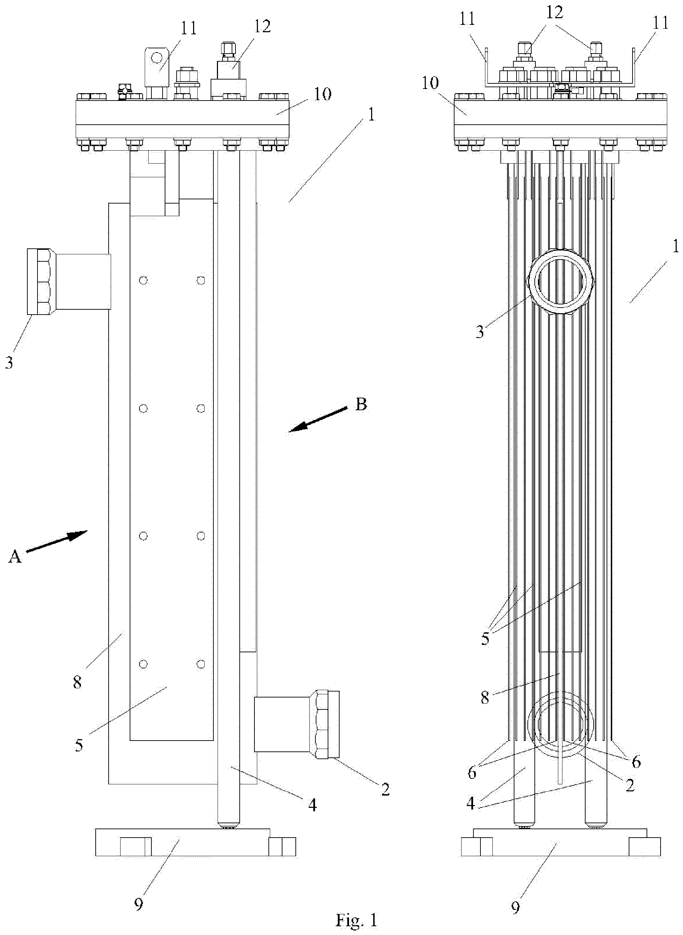

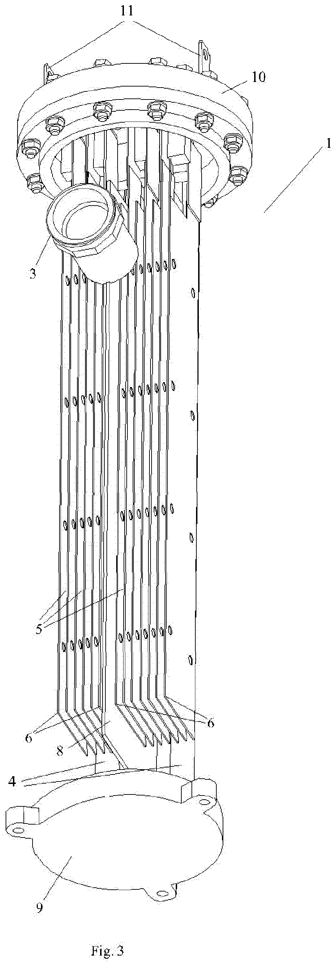

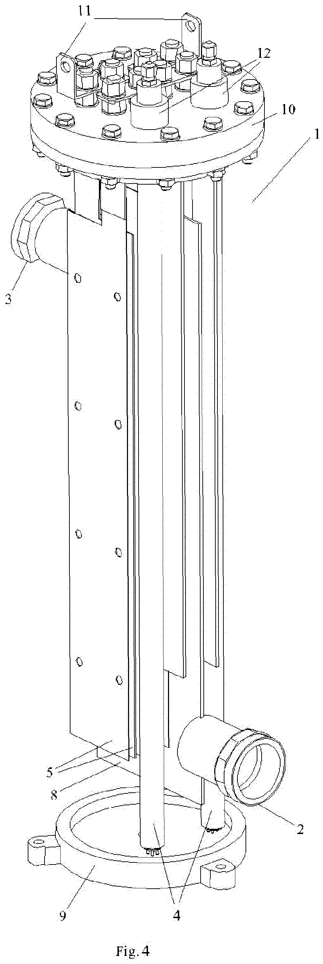

Figures 1 to 5 show said reactor (1) in which the two processes integrated in the method take place, i.e., both electrolysis and ultraviolet radiation are performed simultaneously in the reactor.

Figures 1, 3, 4 and 5 show that this reactor (1) comprises two bundles (6) of electrodes (5) therein, with seven electrodes (5) each and two ultraviolet radiation lamps (4).

The electrodes (5) are in the form of a plate and are arranged alternating the poles.

The ultraviolet lamps (4), in turn, are tubular-shaped and comprise an also tubular-shaped insulating cover element formed by a quartz sleeve in this embodiment.

It also has an inner plate (8) parallel to the bundles (6) of electrodes (5) which minimizes shunt currents in the case of bipolar electrodes.

It further comprises a water inlet connection (2) and another water outlet connection (3) which are asymmetrically arranged in this embodiment.

As shown in Figures 1 to 4, another element of the reactor (1) is the lower supporting flange (9) for supporting the assembly of the two bundles (6) of electrodes (5) and the two ultraviolet lamps (4). In this preferred embodiment of the invention, the lower flange (9) is circular-shaped.

At the end opposite the lower flange (9), the present invention comprises an upper flange (10) for securing said two bundles (6) of electrodes (5) and the two lamps (4). This upper flange (10) is also circular-shaped.

As seen in Figures 1, 3, 4 and 5, upper flange (10) has two L-shaped flat bars (11) (cathode-anode) in the upper portion thereof.

It also comprises in said upper area leak-tight closure means (12) for the quartz sleeves containing the UV lamps.

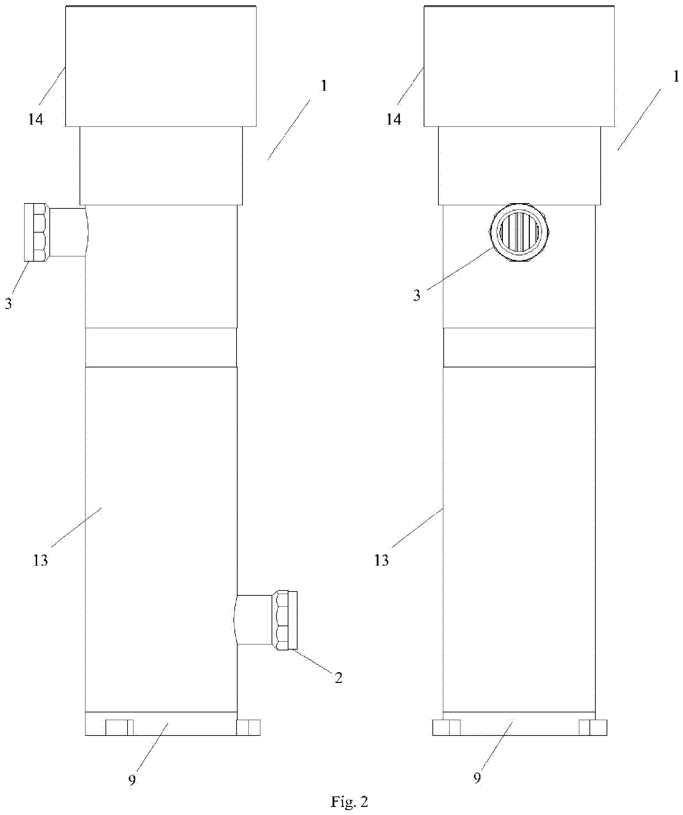

As shown in Figure 2, all these elements are located in a tubular body (13) of the reactor (1) which is cylindrical-shaped in this embodiment.

Said cylindrical tubular body (13) is secured by its lower end to the lower supporting flange (9), whereas the upper end thereof has a closure element (14) for closing it.

The tubular body has two holes coinciding with the two water inlet and outlet connections (2 and 3) which are secured to the inner plate (8) parallel to the two bundles (6) of electrodes (7).

On the other hand, the closure element (14) of the upper end of the tubular body (13) of the reactor (1) is formed by a tubular-shaped cap the dimensions of which meet the condition of the upper flange (10) of the reactor fitting tightly in the inner portion of said cap.

As shown in Figure 5, it comprises in turn a probe holder (15) coupled to the inlet connection (2) of the reactor (1) through which the pH minus acid is introduced therein.

A series of advantages are obtained with this method for purifying water, without the addition of salts, of the type used in swimming pool water treatment herein proposed with respect to the state of the art that make it very cost-effective and efficient.

Simultaneously applying electrolysis and ultraviolet radiation processes yields a result in which the advantages of each individual process are combined, while at the same time the drawbacks of each technique are reduced since they are used independently.

Enhanced chloramine removal, effective organic matter oxidation capacity, the use of a single reactor for both treatment processes used and the continuous chemical cleaning of the UV quartzes and assistance in cleaning cathodes even with electrode polarity reversal, are among the advantages of this method for purifying water.

Besides the mentioned advantages, which are the result of the synergy between both the electrolysis and ultraviolet radiation processes, very important advantages obtained as a result of performing the method, the simultaneous application of the techniques used and the addition of a specific acid, hydrochloric acid, as the pH minus acid at a predetermined point, must be highlighted.

Therefore, any method using both techniques currently still requires the addition of salts to the process. In the method herein proposed, once said process is initiated, no other addition of an additional salt is performed.

## Claims

1. Method for purifying and treating swimming pool water, without the addition of salts, comprising the application of electrolysis technique and ultraviolet radiation technique on the water to be treated, which takes place in a single reactor (1), wherein the reactor has a cylindrical-shaped tubular body (13) comprising at least one bundle of electrodes with at least two electrodes each for electrolysis and at least one ultraviolet lamp for the ultraviolet radiation process, the tubular body (13) also having a bottom water inlet (2) and a top water outlet (3) asymmetrically arranged, **characterized in that** it comprises:
- a first phase, consisting of water entering the reactor (1) via a the water inlet (2),
- a second phase, consisting of water (7) circulating through the reactor (1) such that it is exposed simultaneously to both electrolysis and ultraviolet techniques as it travels from bottom to top of the reactor (1), and
- a third phase, consisting of water (7) exiting the reactor (1) via the water outlet (3) after being treated,
where the three phases are continuous for the time the process lasts once said process is initiated,
and where the method also comprises the continuous addition of a pH minus acid to the reactor (1) at the water inlet (2).

2. Method for purifying water, without the addition of salts, according to claim 1, **characterized in that** said addition of a pH minus acid to the reactor keeps the pH at constant values in the range between 7.0 to 7.8.

3. Method for purifying water, without the addition of salts, according to claim 2, **characterized in that** the pH minus acid added at the inlet (2) of the reactor (1) is preferably hydrochloric acid, which provides a chloride anion to the medium, improving the chloride to chlorine electrolysis process, enhancing organic matter oxidation and disinfection.

4. -Method for purifying water, without the addition of salts, according to any of the preceding claims, **characterized in that** the circulation of water (7) through the reactor (1) in the second phase has a flow rate that on one hand simultaneously allows the suitable discharge of gases produced by electrolysis from the reactor (1) as well as the absence of micro-bubbles that reduce UV radiation transmittance, allowing the in situ generation of chlorine concentrations between 0.5 and 5 ppm at the outlet of the reactor, and on the other hand it allows sufficient dwell time to reach the desired UV-C dose between 1 and 60 mJ/cm2.

## Patentansprüche

1. Verfahren zum Reinigen und Behandeln von Schwimmbadwasser ohne Zugabe von Salzen, umfassend die Anwendung eines Elektrolyseverfahrens und eines UV-Strahlungsverfahrens auf das zu behandelnde Wasser, die in einem einzigen Reaktor (1) erfolgt, wobei der Reaktor einen zylindrischen rohrförmigen Körper (13), umfassend wenigstens ein Bündel von Elektroden mit wenigstens zwei Elektroden jeweils zur Elektrolyse und wenigstens eine UV-Lampe für den UV-Strahlungsprozess, umfasst, wobei der rohrförmige Körper (13) ebenfalls einen unteren Wassereinlass (2) und einen oberen Wasserauslass (3), asymmetrisch angeordnet, aufweist, **dadurch gekennzeichnet, dass** es umfasst:
eine erste Phase, bestehend aus dem Einströmen von Wasser in den Reaktor (1) über den Wassereinlass (2),
eine zweite Phase, bestehend aus dem Umwälzen von Wasser (7) im Reaktor (1), so dass dieses gleichzeitig sowohl dem Elektrolyse- als auch dem UV-Verfahren unterzogen wird, wenn es im Reaktor (1) von oben nach unten strömt, und
eine dritte Phase, bestehend aus dem Ausströmen des Wassers (7) aus dem Reaktor (1) über den Wasserauslass (3) nach dem Behandeln,
wobei die drei Phasen für die Zeit, die der Prozess dauert, kontinuierlich ablaufen, sobald der Prozess gestartet ist,
und wobei das Verfahren ebenfalls das kontinuierliche Hinzufügen einer pH-Minus-Säure zum Reaktor (1) am Wassereinlass (2) umfasst.

2. Verfahren zum Reinigen von Wasser ohne Zugabe von Salzen nach Anspruch 1,
**dadurch gekennzeichnet, dass** das Hinzufügen einer pH-Minus-Säure zum Reaktor den pH-Wert im Bereich von 7,0 bis 7,8 konstant hält.

3. Verfahren zum Reinigen von Wasser ohne Zugabe von Salzen nach Anspruch 2,
**dadurch gekennzeichnet, dass** die am Einlass (2) des Reaktors (1) hinzugefügte pH-Minus-Säure vorzugsweise Salzsäure ist, die ein Chloridanion an das Medium liefert, was den Chlorid-zu-Chlor-Elektrolyseprozess verbessert sowie die Oxidation und Desinfektion von organischen Stoffen optimiert.

4. Verfahren zum Reinigen von Wasser ohne Zugabe von Salzen nach einem der vorhergehenden Ansprüche, **dadurch gekennzeichnet, dass** das Umwälzen von Wasser (7) im Reaktor (1) in der zweiten Phase eine Durchflussrate aufweist, die einerseits gleichzeitig das geeignete Freisetzen von durch die Elektrolyse erzeugten Gasen aus dem Reaktor (1) sowie das Nichtvorhandensein von Mikroblasen, welche die UV-Strahlendurchlässigkeit verringern, ermöglicht, was die Vor-Ort-Erzeugung von Chlorkonzentrationen zwischen 0,5 und 5 ppm am Auslass des Reaktors ermöglicht, und andererseits eine ausreichende Verweilzeit zum Erreichen der gewünschten UV-C-Dosis zwischen 1 und 60 mJ/cm² ermöglicht.

## Revendications

1. Procédé d'épuration et de traitement de l'eau de piscine, sans ajout de sels, comprenant l'application d'une technique d'électrolyse et d'une technique de rayonnement ultraviolet sur l'eau à traiter, qui a lieu dans un unique réacteur (1), dans lequel le réacteur possède un corps tubulaire de forme cylindrique (13) comprenant au moins un faisceau d'électrodes avec au moins deux électrodes chacune pour électrolyse et au moins une lampe à ultraviolets pour le processus de rayonnement ultraviolet, le corps tubulaire (13) ayant également une entrée d'eau inférieure (2) et une sortie d'eau supérieure (3) disposées de façon asymétrique, **caractérisé en ce qu'**il comprend :
une première phase, consistant en l'entrée de l'eau dans le réacteur (1) par l'entrée d'eau (2),
une deuxième phase, consistant en la circulation de l'eau (7) à travers le réacteur (1) de telle sorte qu'elle soit exposée simultanément aux techniques d'électrolyse et de rayonnement ultraviolet, lorsqu'elle se déplace du bas vers le haut du réacteur (1), et
une troisième phase, consistant en la sortie de l'eau (7) du réacteur (1) par la sortie d'eau (3) après avoir été traitée,
dans lequel les trois phases sont continues pour la durée du processus une fois que ledit processus est démarré,
et dans lequel le procédé comprend également l'ajout en continu d'un acide pH moins au réacteur (1) au niveau de l'entrée d'eau (2).

2. Procédé d'épuration de l'eau, sans ajout de sels, selon la revendication 1, **caractérisé en ce que** ledit ajout d'un acide pH moins au réacteur maintient le pH à des valeurs constantes dans la plage entre 7,0 et 7,8.

3. Procédé d'épuration de l'eau, sans ajout de sels, selon la revendication 2, **caractérisé en ce que** l'acide pH moins ajouté au niveau de l'entrée (2) du réacteur (1) est de préférence de l'acide chlorhydrique, qui fournit un anion chlorure au milieu, améliorant le procédé d'électrolyse du chlorure en chlore, améliorant l'oxydation des matières organiques et la désinfection.

4. Procédé d'épuration de l'eau, sans ajout de sels, selon l'une quelconque des revendications précédentes, **caractérisé en ce que** la circulation de l'eau (7) à travers le réacteur (1) dans la deuxième phase présente un débit qui d'une part permet simultanément la libération appropriée des gaz produits par électrolyse à partir du réacteur (1) ainsi que l'absence de microbulles qui réduisent la transmittance de rayonnement UV, permettant la production in situ de concentrations de chlore entre 0,5 et 5 ppm au niveau de la sortie du réacteur et, d'autre part laisse un temps de séjour suffisant pour atteindre la dose d'UV-C souhaitée entre 1 et 60 mJ/cm2.
